# EUROPEAN PATENT SPECIFICATION

(11) **EP 2 078 629 B1**
(45) Date of publication and mention of the grant of the patent: **20.03.2013**
(21) Application number: 09150184.1
(22) Date of filing: 08.01.2009
(51) Int. Cl.: B60H 3/06

(54) **Cover for an air filter, in particular for a motor vehicle.**
Abdeckung für einen Luftfilter, insbesondere für ein Kraftfahrzeug.
Couvercle pour un filtre à air, en particulier pour le moteur d'un véhicule

(30) Priority: 11.01.2008 DE 102008003931
(43) Date of publication of application: 15.07.2009
(73) Proprietor: Valeo Klimasysteme GmbH, 96476 Bad Rodach (DE)
(72) Inventor: Hopf, Wolfgang c/o Valeo Klimasysteme GmbH, 96342 Stockheim (DE); Gwosdek, Albert c/o Valeo Klimasysteme GmbH, 96342, Haßlach (DE)
(74) Representative: Léveillé, Christophe

(56) References cited:
- DE-C1- 19 616 436
- US-B1- 6 312 327
- US-B1- 6 722 152

## Description

The invention relates to a cover for an air filter, in particular for a motor vehicle, having an air-inlet opening through which air can flow to the air filter.

A cover of this type is fitted to an air-filter housing in which an air filter is arranged. The air filter is part of an air-conditioning system with which functions such as heating and/or cooling can be implemented in addition to ventilating an interior space in the motor vehicle.

A very wide variety of covers for air filters are known. The main function of a cover of this type is to close the opening through which the air filter can be inserted into or removed from the air-filter housing. At the same time, the cover can have other roles. For example, the cover can firmly clamp the air filter in the air-filter housing. Covers which have an integrated air-inlet opening through which the air can flow into the air-filter housing to the air filter are also known. Document US 6 722 152 discloses such a cover.

The object of the invention is to provide a cover for an air filter which is distinguished by improved functionality together with a simple design.

In order to achieve this object, the invention provides for a cover of the abovementioned type to be provided with an air-guide face which, by way of one side, adjoins the air-inlet opening. The air-guide face ensures that the air flowing in from outside is conducted in an optimum fashion to the air-inlet opening, so that it enters the air-filter housing with a low level of flow losses.

Provision is preferably made for the air-guide face, on that side which is opposite the air-inlet opening, to extend as far as the lower side of the cover. In this way, the air is conducted directly to the air-inlet opening.

According to a preferred embodiment of the invention, a water duct is provided, with which water from the air filter can be conducted to the outside. The water duct ensures that water entering the air-filter housing can be routed out of the air-flter housing again.

According to a preferred embodiment of the invention, provision is made for the water duct to have a discharge face which engages beneath the air filter. When the cover is mounted on the air-filter housing, this ensures that water which precipitates on the air filter is conducted out of the air-filter housing again, without additional steps being required.

Provision is preferably made for the water duct to open out in the air-guide face. Since the air-guide face is located on the front of and outside the air-filter housing, the water emerging there can simply drip off downwards.

According to a preferred embodiment of the invention, provision is made for the water duct to have a steep step directly behind the air-guide face. The step prevents the back pressure in front of the air-guide face from pushing back the water flowing to the outside again, as a result of which it would accumulate in the interior of the air-filter housing.

Provision is made for the air-guide face to be curved. In this way, the air flowing to the air filter can be directed towards the air-inlet opening smoothly and with a low level of flow losses.

The air-inlet opening is preferably provided with a coarse-particle filter. This prevents relatively large objects, such as leaves etc., being able to reach the actual air filter.

According to one embodiment, the coarse-particle filter can be formed by a lattice which is designed integrally with the cover. In this way, the coarse-particle filter can be formed with a low level of outlay on production. In particular, no additional mounting steps are required.

According to a preferred embodiment of the invention, a snap-action closure means is provided, with which the cover can be fitted to an air-filter housing. A snap-action closure means of this type allows the cover to be fitted to the air-filter housing with an absolute minimum level of outlay. In addition, the cover can be removed very easily without a tool being required for this purpose. This ensures, overall, that the air filter can be inspected and, if required, replaced with a low level of outlay.

According to one embodiment of the invention, a pivot bearing is provided, with which the cover can be fitted to an air-filter housing. The pivot bearing is fitted, in particular, to a side which is opposite that side on which the snap-action closure means is provided. The pivot bearing allows the cover to be fitted to the air-filter housing on one side and then to be pivoted in a targeted manner about the pivot bearing, so that the snap-action closure means latches in automatically.

According to one preferred embodiment of the invention, a labyrinth structure is provided, so that the cover can form a labyrinth seal with the air-filter housing. The labyrinth seal ensures effective sealing between the cover and the air-filter housing.

The labyrinth structure is preferably provided in the vicinity of the snap-action closure means. In this way, any loads which act on the cover can be introduced into the air-filter housing directly via the labyrinth structure, so that the snap-action hooks of the snap-action closure means are not loaded by transverse forces.

The abovementioned object is also achieved by an air-filter housing for an air-conditioning system, in particular for a motor vehicle, having a cover which has an air-inlet opening through which air can flow to the air filter, with an air-guide face being provided which, by way of one side, adjoins the air-inlet opening. The air-guide face which is integrated in the cover ensures that the air can flow to the air-inlet opening and from there through the air filter with the lowest possible level of losses. Separate air-guiding means are not required.

In an air-filter housing of this type, provision is preferably made for an air filter to be arranged in the interior of the said air-filter housing, and for the cover to be provided with an abutment which acts on the air filter. By integrating the abutment, the cover is able to reliably position the air filter in the interior of the air-filter housing without additional outlay.

In this case, provision is preferably made for the abutment to be arranged behind the air-guide face. This allows it to be designed integrally with the wall of the cover whose outer side forms the air-guide face. At the same time, the abutment can serve to stabilize the air-guide face.

According to a preferred embodiment, provision is made for the cover to be mounted on the air-filter housing by means of a pivot bearing. In this way, the cover can be easily mounted on the air-filter housing. In a preliminary position, the cover is inserted into the pivot bearing and then pivoted to its end position.

According to a preferred embodiment, provision may be made for the cover to be fixed to the air-filter housing by means of a snap-action closure means. In this way, no additional steps need to be performed to lock the cover when fitting the cover to the air-filter housing; the snap-action closure means ensures automatic fixing when the cover reaches its end position.

Advantageous refinements of the invention can be found in the subclaims.

The invention will be described in the text which follows with reference to a preferred embodiment which is illustrated in the appended drawings, in which:
- Figure 1 shows a front view of a cover according to the invention;
- Figure 2 shows a section through an air-filter housing to which the cover from Figure 1 is fitted;
- Figure 3 shows a view according to that of Figure 2, with the flow path of the air being illustrated;
- Figure 4 shows a view according to that of Figure 2, with the cover being shown in an intermediate mounting position and in its fully mounted position; and
- Figure 5 shows detail V from Figure 4 on an enlarged scale.

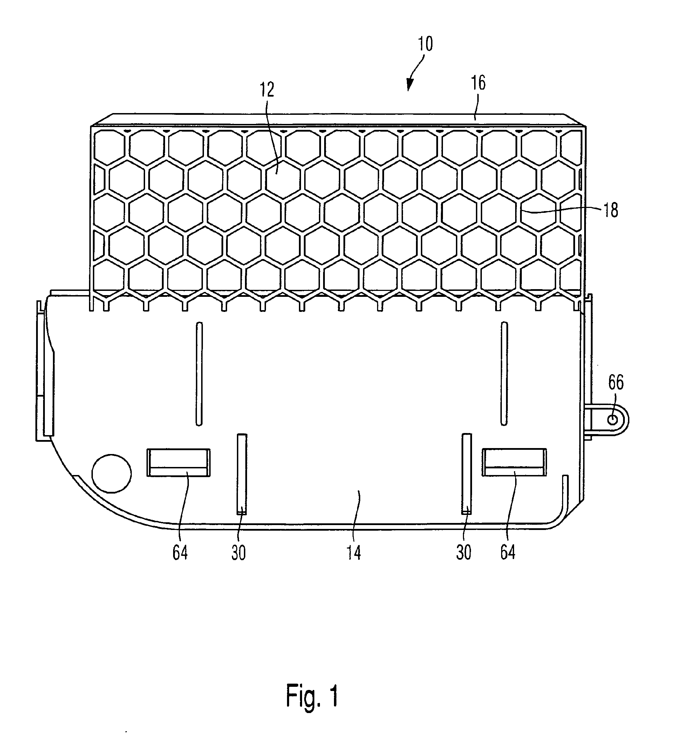

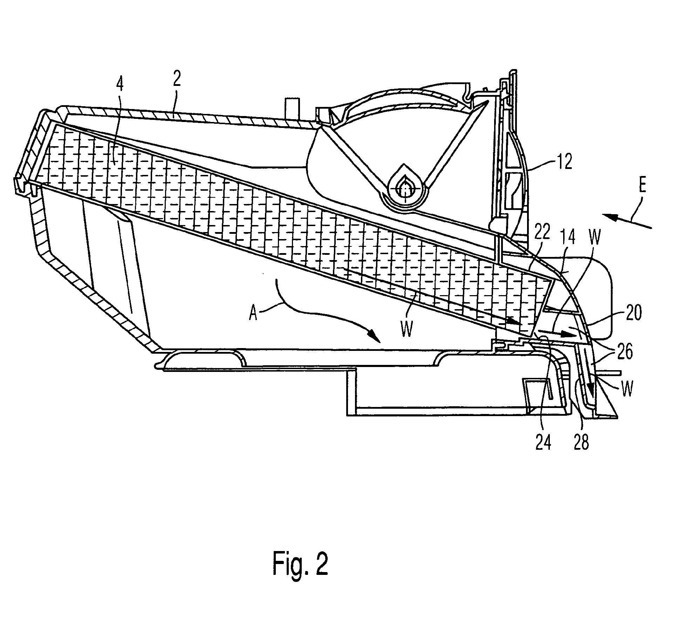

Figure 1 shows a cover 10 for an air filter, which cover is intended to be fitted to an air-filter housing 2 (see Figure 2). The air-filter housing 2 has an air filter 4 which serves to remove particles of dirt from an air stream which flows into the air-filter housing 2 (arrow E of Figure 2) and flows out of the air-filter housing 2 after flowing through the air filter 4 (arrow A of Figure 2). The air-filter housing may be part of an air-conditioning system with which heated and/or cooled air can be supplied to an interior space in a motor vehicle.

The cover 10 can be roughly divided into two sections, specifically an upper air-inlet section with an air-inlet opening 12 and a lower air-guide section with an air-guide face 14, the air-inlet opening directly adjoining this air-guide face. The air-inlet opening 12 is surrounded by a frame 16 and provided with a coarse-particle filter 18 which is designed integrally with the frame and is formed by a plastic lattice. In this case, the said plastic lattice is designed such that the air-inlet opening 12 is divided into a large number of honeycomb-like individual openings.

The air-guide section of the cover 10 comprises a substantially continuous wall 20 whose outer side forms the air-guide face 14 and on whose rear side a plurality of reinforcements are arranged. At least one of the reinforcements 21 is cut out such that it serves as an abutment 22 or support means for the air filter 4. The air filter 4 is therefore reliably held in its correct position in the air-filter housing 2 when the cover 10 is mounted. The air-guide face 14 is of gently curved design, so that the air which strikes it is conducted to the air-inlet opening 12 without eddying.

A portion of the reinforcements of the wall 20 is also a discharge face 24 which engages beneath the filter 4 when the cover 10 is mounted. The discharge face 24 is part of a water duct 26, with which water from the filter 4 can be conducted out of the air-filter housing 2 (see arrows W in Figure 2). The water duct 26 has a steep step 28, along which the water duct 26 extends steeply downwards, immediately upstream of the outlet, as seen in the outflow direction of the water. The water duct 26 then immediately issues through openings 30 in the air-guide face 14. The step 28 ensures that the air which flows along the air-guide face 14 to the air-inlet opening 12 cannot push the water discharged from the filter 4 back into the interior of the air-filter housing 2.

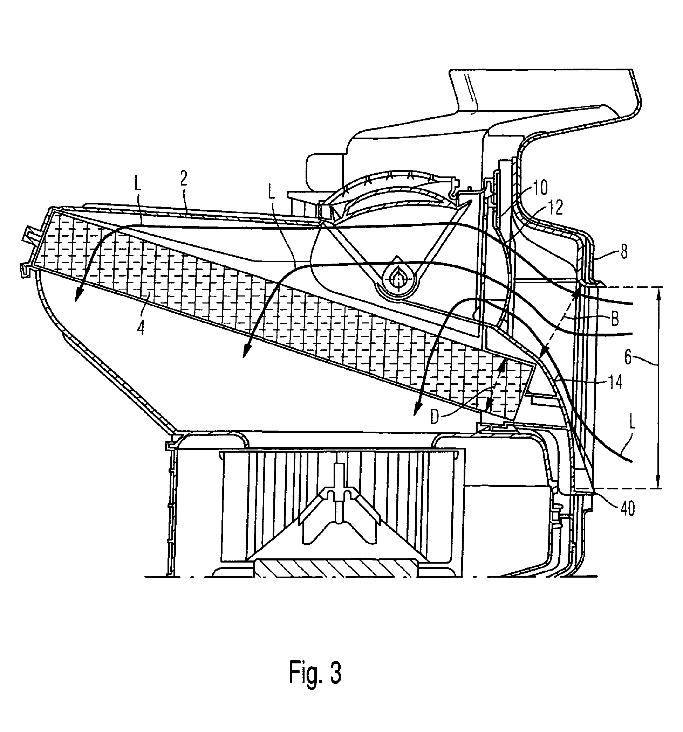

Figure 3 shows the course of the flow of air into the air-filter housing 2 from the outside (see arrows L). The air flows through an air-inlet opening 6 in a housing 8 of an air-conditioning system to the air-inlet opening 12 in the cover 10. It can be seen here how the air-guide face 14 ensures that the air located in the lower part of the air-inlet opening 6 is deflected smoothly upwards to the air-inlet opening 12. From here, the said air flows, in the interior of the air-filter housing 2, to the air filter 4. Overall, this therefore produces a comparatively large volume of air which is conducted through the air filter.

Figure 3 also shows that a lower, lip-like edge 40 of the cover 10 extends as far as the outside of the housing 8 of the air-conditioning system, so that the water conducted away from the air filter 4 can drip off outside the air-conditioning system.

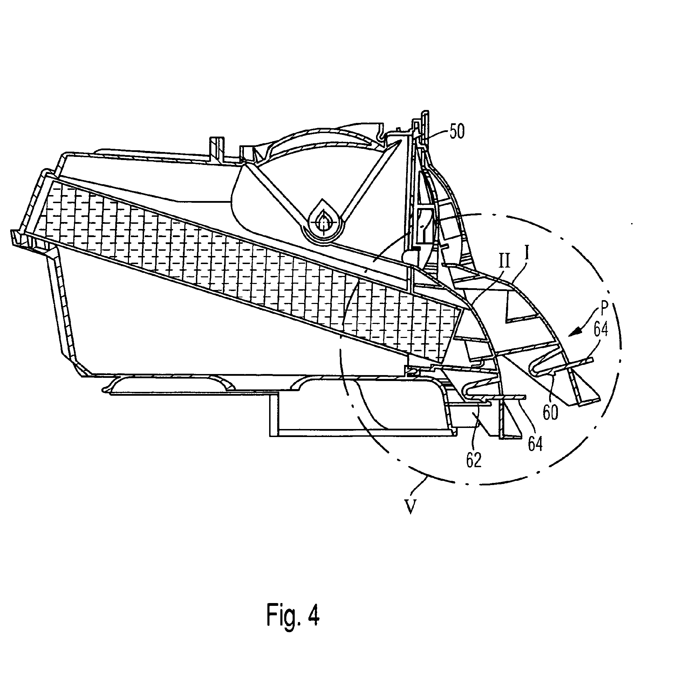

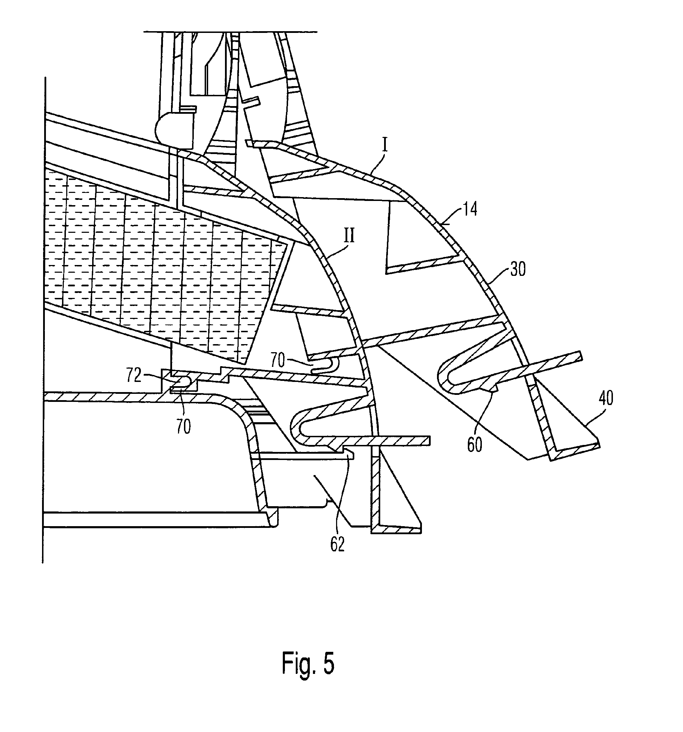

Figures 4 and 5 illustrate how the cover 10 is mounted on the air-filter housing 2. The cover 10 is provided with a pivot bearing arrangement 50 in the vicinity of its upper edge, it being possible for the said pivot bearing arrangement to be formed by a plurality of pins or else by rounded pivot faces. The pivot bearing arrangement 50 interacts with complementary faces on the air-filter housing 2, so that the cover 10 can be positioned on the air-filter housing 2 in the position identified by reference symbol I in figure 4 and then can be pivoted downwards about the pivot bearing arrangement 50 in the direction of arrow P. In the end position, latching hooks 60 of the cover 10 engage on latching lugs 62 of the air-filter housing 2, so that the cover is held in the mounted position by the snap-action closure means formed. The latching hooks are provided with operating projections 64 which extend to the outside through the wall 30. In this way, the latching hooks can be released without using a tool, in order to remove the cover 10 from the air-filter housing 2.

In addition to the snap-action closure means, a screw lug 66 is also provided on the side of the cover 10, by means of which screw lug the cover can be firmly fitted to the air-filter housing by means of a screw if the snap-action closure means fail.

Figures 4 and 5 also show that a labyrinth structure 70 is formed on the cover 10, the said labyrinth structure forming a labyrinth seal together with a mating piece 72 on the air-filter housing 2. The labyrinth structure 70 is of groove-like design here. The labyrinth structure can also extend along the remaining four edges of the cover 10.

## Claims

1. Cover (10) for an air filter housing (2), in particular for a motor vehicle, divided into a first and second sections, the first section having an air-inlet opening (12) through which air is able to flow through an air filter (4) arranged into the air-filter housing (2),
**characterized in that** the second section of the cover (10) has an air-guide face (14) directly adjoining the air-inlet opening (12) and being curved, in such a way that the air flowing to the air filter (4) is directed towards the air-inlet opening (12).

2. Cover (10) according to claim 1, **characterized in that** the cover (10) comprises a water duct (26), with which water from the air filter (4) is able to be conducted to the outside the air-filter housing (2).

3. Cover (10) according to Claim 2, **characterized in that** the water duct (26) has a discharge face (24) which engages beneath the air filter (4).

4. Cover (10) according to Claim 3, **characterized in that** the water duct (26) opens through openings (30) in the air-guide face (14).

5. Cover (10) according to Claim 4, **characterized in that** the water duct (26) has a steep step (28) directly behind the air-guide face (14) and disposed upstream of openings (30), according to an outflow direction of the water in the water duct (26).

6. Cover (10) according to one of the preceding claims, **characterized in that** the air-inlet opening (12) is provided with a coarse-particle filter (18).

7. Cover (10) according to Claim 6, **characterized in that** the coarse-particle filter (18) is formed by a lattice which is designed integrally with the cover (10).

8. Cover (10) according to one of the preceding claims, **characterized in that** a snap-action closure means (60) is provided, with which the cover (10) is able to be fitted to an air-filter housing (2).

9. Cover (10) according to one of the preceding claims, **characterized in that** a pivot bearing (50) is provided, with which the cover (10) is able to be fitted to an air-filter housing (2).

10. Cover (10) according to one of the preceding claims, **characterized in that** a labyrinth structure (70) is provided, so that the cover (10) is able to form a labyrinth seal with an air-filter housing (2).

11. Cover (10) according to Claim 8 and Claim 10, **characterized in that** the labyrinth structure (70) is provided in the vicinity of the snap-action closure means (60).

12. Air-filter housing (2) for an air-conditioning system, in particular for a motor vehicle, having a cover (10) according to one of the preceding claims.

13. Air-filter housing (2) according to Claim 12, **characterized in that** an air filter (4) is arranged in the interior of the said air-filter housing, and **in that** the cover (10) is provided with an abutment (22) which acts on the air filter (4).

14. Air-filter housing according to Claim 13, **characterized in that** the abutment (22) is arranged behind the air-guide face (14).

15. Air-filter housing (2) according to either of Claims 12 and 13, **characterized in that** the cover is mounted on the air-filter housing (2) by means of a pivot bearing (50).

16. Air-filter housing (2) according to one of Claims 12 to 15, **characterized in that** the cover (10) is fixed to the air-filter housing (2) by means of a snap-action closure means (60).

## Patentansprüche

1. Abdeckung (10) für ein Luftfiltergehäuse (2), insbesondere für ein Kraftfahrzeug, die in einen ersten und zweiten Abschnitt eingeteilt ist, wobei der erste Abschnitt eine Lufteinlaßöffnung (12) aufweist, durch die hindurch Luft durch einen Luftfilter (4) strömen kann, der im Luftfiltergehäuse (2) angeordnet ist, **dadurch gekennzeichnet, daß** der zweite Abschnitt der Abdeckung (10) eine Luftführungsfläche (14) aufweist, die direkt an die Lufteinlaßöffnung (12) angrenzt und gekrümmt ist, so daß die zum Luftfilter (4) strömende Luft zur Lufteinlaßöffnung hin gelenkt wird.

2. Abdeckung (10) nach Anspruch 1, **dadurch gekennzeichnet, daß** die Abdeckung (10) einen Wasserkanal (26) umfaßt, mit dem Wasser vom Luftfilter (4) zur Außenseite des Luftfiltergehäuses (2) geleitet werden kann.

3. Abdeckung (10) nach Anspruch 2, **dadurch gekennzeichnet, daß** der Wasserkanal (26) eine Ableitfläche (24) aufweist, die den Luftfilter (4) untergreift.

4. Abdeckung (10) nach Anspruch 3, **dadurch gekennzeichnet, daß** der Wasserkanal (26) durch Öffnungen (30) in der Luftführungsfläche (14) mündet.

5. Abdeckung (10) nach Anspruch 4, **dadurch gekennzeichnet, daß** der Wasserkanal (26) unmittelbar hinter der Luftführungsfläche (14) eine steile Stufe (28) aufweist, die gemäß einer Ablaufrichtung des Wassers in dem Wasserkanal (26) stromaufwärts von den Öffnungen (30) angeordnet ist.

6. Abdeckung (10) nach einem der vorhergehenden Ansprüche, **dadurch gekennzeichnet, daß** die Lufteinlaßöffnung (12) mit einem Grobfilter (18) versehen ist.

7. Abdeckung (10) nach Anspruch 6, **dadurch gekennzeichnet, daß** der Grobfilter (18) durch ein Gitter gebildet ist, das einstückig mit der Abdeckung (10) ausgeführt ist.

8. Abdeckung (10) nach einem der vorhergehenden Ansprüche, **dadurch gekennzeichnet, daß** ein Schnappverschluß (60) vorgesehen ist, mit dem die Abdeckung (10) an einem Luftfiltergehäuse (2) angebracht werden kann.

9. Abdeckung (10) nach einem der vorhergehenden Ansprüche, **dadurch gekennzeichnet, daß** ein Schwenklager (50) vorgesehen ist, mit dem die Abdeckung (10) an einem Luftfiltergehäuse (2) angebracht werden kann.

10. Abdeckung (10) nach einem der vorhergehenden Ansprüche, **dadurch gekennzeichnet, daß** eine Labyrinthstruktur (70) vorgesehen ist, so daß die Abdeckung (10) mit einem Luftfiltergehäuse (2) eine Labyrinthdichtung bilden kann.

11. Abdeckung (10) nach 8 und Anspruch 10, **dadurch gekennzeichnet, daß** die Labyrinthstruktur (70) in der Nähe des Schnappverschlusses (60) vorgesehen ist.

12. Luftfiltergehäuse (2) für ein Klimagerät, insbesondere für ein Kraftfahrzeug, mit einer Abdeckung (10) nach einem der vorhergehenden Ansprüche.

13. Luftfiltergehäuse (2) nach Anspruch 12, **dadurch gekennzeichnet, daß** in seinem Inneren ein Luftfilter (4) angeordnet ist und daß die Abdeckung (10) mit einem Widerlager (22) versehen ist, das am Luftfilter (4) angreift.

14. Luftfiltergehäuse nach Anspruch 13, **dadurch gekennzeichnet, daß** das Widerlager (22) hinter der Luftführungsfläche (14) angeordnet ist.

15. Luftfiltergehäuse (2) nach einem der Ansprüche 12 und 13, **dadurch gekennzeichnet, daß** die Abdeckung mittels eines Schwenklagers (50) am Luftfiltergehäuse (2) gelagert ist.

16. Luftfiltergehäuse (2) nach einem der Ansprüche 12 bis 15, **dadurch gekennzeichnet, daß** die Abdeckung (10) mittels eines Schnappverschlusses (60) am Luftfiltergehäuse (2) befestigt ist.

## Revendications

1. Couvercle (10) pour un boîtier de filtre à air (2), en particulier pour un véhicule à moteur, divisé en des première et deuxième sections, la première section ayant une ouverture d'entrée d'air (12) à travers laquelle de l'air est apte à s'écouler à travers un filtre à air (4) agencé dans le boîtier de filtre à air (2),
**caractérisé en ce que** la deuxième section du couvercle (10) a une face de guidage d'air (14) directement contiguë à l'ouverture d'entrée d'air (12) et incurvée, d'une manière telle que l'air s'écoulant jusqu'au filtre à air (4) soit dirigé en direction de l'ouverture d'entrée d'air (12).

2. Couvercle (10) selon la revendication 1, **caractérisé en ce que** le couvercle (10) comprend un conduit d'eau (26), avec lequel de l'eau provenant du filtre à air (4) est apte à être conduite jusqu'à l'extérieur du boîtier de filtre à air (2).

3. Couvercle (10) selon la revendication 2, **caractérisé en ce que** le conduit d'eau (26) a une face de sortie (24) qui vient en prise sous le filtre à air (4).

4. Couvercle (10) selon la revendication 3, **caractérisé en ce que** le conduit d'eau (26) s'ouvre à travers des ouvertures (30) dans la face de guidage d'air (14).

5. Couvercle (10) selon la revendication 4, **caractérisé en ce que** le conduit d'eau (26) a un gradin abrupt (28) directement derrière la face de guidage d'air (14) et disposé en amont des ouvertures (30), suivant une direction d'évacuation de l'eau dans le conduit d'eau (26).

6. Couvercle (10) selon l'une des revendications précédentes, **caractérisé en ce que** l'ouverture d'entrée d'air (12) est pourvue d'un filtre à particules grossières (18).

7. Couvercle (10) selon la revendication 6, **caractérisé en ce que** le filtre à particules grossières (18) est formé par un treillis qui est conçu d'un seul tenant avec le couvercle (10).

8. Couvercle (10) selon l'une des revendications précédentes, **caractérisé en ce qu'**un moyen de fermeture par action d'encliquetage (60) est prévu, avec lequel le couvercle (10) est apte à être adapté à un boîtier de filtre à air (2).

9. Couvercle (10) selon l'une des revendications précédentes, **caractérisé en ce qu'**un palier de pivotement (50) est prévu, avec lequel le couvercle (10) est apte à être adapté à un boîtier de filtre à air (2).

10. Couvercle (10) selon l'une des revendications précédentes, **caractérisé en ce qu'**une structure en labyrinthe (70) est prévue, de telle sorte que le couvercle (10) soit apte à former un joint à labyrinthe avec le boîtier de filtre à air (2).

11. Couvercle (10) selon la revendication 8 et la revendication 10, **caractérisé en ce que** la structure en labyrinthe (70) est prévue à proximité du moyen de fermeture par action d'encliquetage (60).

12. Boîtier de filtre à air (2) pour un système de climatisation, en particulier pour un véhicule à moteur, ayant un couvercle (10) selon l'une des revendications précédentes.

13. Boîtier de filtre à air (2) selon la revendication 12, **caractérisé en ce qu'**un filtre à air (4) est agencé dans l'intérieur dudit boîtier de filtre à air, et **en ce que** le couvercle (10) est pourvu d'une butée (22) qui agit sur le filtre à air (4).

14. Boîtier de filtre à air selon la revendication 13, **caractérisé en ce que** la butée (22) est agencée derrière la face de guidage d'air (14).

15. Boîtier de filtre à air (2) selon l'une ou l'autre des revendications 12 et 13, **caractérisé en ce que** le couvercle est monté sur le boîtier de filtre à air (2) au moyen d'un palier de pivotement (50).

16. Boîtier de filtre à air (2) selon l'une des revendications 12 à 15, **caractérisé en ce que** le couvercle (10) est fixé au boîtier de filtre à air (2) au moyen d'un moyen de fermeture par action d'encliquetage (60).
